# EUROPEAN PATENT SPECIFICATION

(11) **EP 3 584 473 B1**
(45) Date of publication and mention of the grant of the patent: **05.11.2025**
(21) Application number: 19178874.4
(22) Date of filing: 06.06.2019
(51) Int. Cl.: F16K 1/46, F16K 11/044

(54) **SEALING SYSTEM FOR SWITCHABLE WATER VALVE**
DICHTUNGSSYSTEM FÜR SCHALTBARES WASSERVENTIL
SYSTÈME D'ÉTANCHÉITÉ POUR SOUPAPE D'EAU COMMUTABLE

(30) Priority: 20.06.2018 DE 102018114849
(43) Date of publication of application: 25.12.2019
(73) Proprietor: Johnson Electric International AG, 3280 Murten (CH)
(72) Inventor: Barthel, Daniel Gerhard, Hong Kong Shatin, N.T. (HK); Schafer, Simone, Hong Kong Shatin, N.T. (HK)
(74) Representative: Hocking, Adrian Niall

(56) References cited:
- EP-A1- 0 916 879
- EP-A1- 1 659 319
- EP-A1- 3 276 236
- WO-A1-2018/114597
- CN-A- 103 672 022
- CN-A- 106 051 215
- CN-U- 201 547 374
- CN-U- 202 152 864
- CN-Y- 201 209 690
- DE-A1- 10 312 169
- DE-A1- 102012 219 745
- DE-U1- 202011 107 875
- SK-Y1- 8 116
- US-A- 3 831 900
- US-A- 3 968 971
- US-A- 4 085 775
- US-A- 4 726 493
- US-A- 5 127 661
- US-A- 5 609 343
- US-A- 6 123 096
- US-A1- 2010 096 033
- US-B2- 9 341 273

## Description

### FIELD OF THE INVENTION

The invention relates to a sealing system for switchable water valves for use in heating appliances and water heaters, in particular for three-way water valves.

### BACKGROUND OF THE INVENTION

In domestic heating appliances or water heaters, in particular in the field of gas-fuelled boilers, a variety of different valve types are known which interrupt and, as needed, redirect the water flow for water circuits. Generally, the valves are fully open or fully closed. Preferably, electromechanically actuated two-way valves or three-way valves are used here. These valves must be designed such that inside them there is no significant pressure drop during water flow and leakage can be reliably excluded in the valve area within the water circuits over the whole temperature range in which they are operated. To be able to avoid leakage, elastically deformable materials are used as sealing bodies, on which a specific pressure force must then be exerted so that the material can be deformed within specific limits in order to ensure the required tightness over extended periods despite multiple switching cycles. On the other hand, the forces acting on the valve body should not be too large because this involves high energy consumption. The electromechanical drives should thus not be dimensioned too large to be able to use cost-efficient drives. Since these are mass products, even small savings result in big economic effects. In principle, there are two solution approaches. On the one hand, there are valves with a hollow cylindrical valve closure system or with spherical valve spaces and matching spherical valve bodies for sealing the valve.

A mixing valve according to the three-way principle with a cylindrical valve closure, which is guided in a bush in a linearly moveable manner, is known from DE 20 2011 004 422 U1. In this valve, the cylindrical valve body is disposed in a mixing chamber such that it shuts off or opens variable proportions of the cross-section of two inlet pipes. Here, the valve spool is made of stainless steel and the valve body is guided in a bush of a carbon-graphite material in a form-fitting manner. This design is costly and is difficult to be manufactured automatically in large series because what matters here is the precise fit of the individual valve components relative to each other and the precise seating of the valve spool.

DE 687 18317 T2 describes a somewhat more spherical sealing body, which is supposed to offer an improved valve arrangement for heating systems and water heaters with greater leakproof capacity. The sealing body described here is a kind of sealing ball of a cylindrical metal body, which in turn must be moved into cylindrical sealing surfaces. To prevent leakage, a side ring (acting as the actual sealing ring) is disposed inside the valve body to be compressed radially in order to ensure tightness. This design is also intended to avoid any contamination or deposits inside the valve body or to ensure that these have no influence on the tightness of the valve. The disadvantage of this solution is a relatively long travel path for the sealing body because it must be displaced quite a long way into the cylindrical sealing surfaces of the valve seats and as far until the central side ring (sealing ring) can produce its effect. Furthermore, this solution is characterized by the use of expensive materials and the relatively complex manufacture of the sealing body, i.e. manufacture is hard to automate.

An electromechanically operated three-way valve with two valve seats is known from DE 10 2012 219 745 A1, wherein a single valve seal is disposed to be moved towards a valve seat with a minimal area to seal it appropriately. The sealing surfaces of the valve body are tapered such that the valve body lies flat against them. The valve stem is smaller in diameter than the inner diameter of the valve body. This has the advantage that only the areas lying against the valve surfaces are stressed. The sealing body is guided axially at two opposite points inside the valve body so that it cannot cant or lie against the engaged valve seat in an off-centre position, i.e. in a slantwise manner. This, however, increases the flow resistance to the flowing fluid. It is also disadvantageous that any deformations of the sealing body, e.g. when the sealing body has been pressed on one side against one of the valve seats for a very long time, can potentially affect leakage in the sealing position in the other position. Other examples of such valves are disclosed in CN201547374U,

CN103672022A, DE202011107875U1, and CN202152864U.

### SUMMARY OF THE INVENTION

The object of the invention is to create a sealing system for switchable water valves for use in heating appliances and water heaters which is constructively simple, consists of very few components with minimal material usage, can be mounted very fast in an automated way, has a low flow resistance in the open state, has no leakage in either valve position and has a long service life. As such, in accordance with a first aspect of the invention, there is provided a sealing system for switchable water valves designed as a three-way water valve comprising a drive by means of a linear stepper motor disposed at a cartridge and adjustment by means of a valve actuating rod and a valve body, the sealing system comprising a sealing body configured to be disposed in the valve body, the sealing body comprising a sealing body main part with one or two central ribs, the sealing body main part being disposed on the valve actuating rod, and the sealing body including two sealing rings of the O-ring type being spaced a defined distance from each other, and are press-fitted on the sealing body main part, each of the sealing rings having a cross-sectional shape of a slanted slightly convex conical area defined by a larger end, a smaller end and two sides, each of the two sides being connected to the larger end and the smaller end, the larger end being connected to the two sides and defining a rear sealing surface of each of the sealing rings, the rear sealing surface having a radially-shaped surface contour, one of the two sides being in contact with the sealing body main part and the other one of the two sides defining a front sealing surface being of slightly convex conical shape, and each of the rear sealing surfaces being in contact with a respective side of the one central rib or with a respective side of the central rib facing away from the other central rib, so that a cavity is formed at the back of each of the sealing rings between the rear sealing surface of the sealing rings and the central rib(s) and the sealing body main part.

The advantage of the sealing system according to the invention for switchable water valves for use in heating appliances and water heaters is that it is constructively very simple and consists of very few components. This allows its fast and automated manufacture. Moreover, it has such a sealing effect that in this type of water valves, to which pressures up to bar and more are applied, no leakage occurs in both valve positions over a long period of time when it is used in a three-way water valve. Moreover, due to the constructive design as compared with previous comparable three-way water valves, the flow resistance is reduced further. The travel path of the valve actuating rod with the two sealing rings can also be shortened since the axial swelling of the sealing rings could also be shortened. Moreover, material usage as compared with other sealing bodies is reduced so that the economy of the three-way valve improves. With the sealing system according to the invention, it is also possible to operate with the same or higher contact pressures of the sealing body against the sealing surfaces of the valve body. Moreover, different sealing surface geometries inside the valve body can be realized in a simple manner depending on the special application case. The sealing system for switchable water valves is configured as a three-way water valve with a linear stepper motor drive. This linear stepper motor is disposed outside at a cartridge, which is inserted into the valve body and seal-connected to it. The linear displacement of the complete sealing body is effected by a valve actuating rod, which is guided through the cartridge. The sealing body is disposed directly on the valve actuating rod and joined to it. Generally, it is directly overmoulded directly on the valve actuating rod. However, it can also be shrink-fitted as a separate component, e.g. on the valve actuating rod, or be disposed in any other way, such as connected in a mechanically displaceable manner. The sealing body on the valve actuating rod consists of a sealing body main part on which one or two disc-shaped central ribs are disposed. The sealing body main part has two press-fitted specially shaped sealing rings of the O-ring type spaced a defined distance from each other by the one or two central ribs. These two sealing rings are fixed in their positions by two circumferential flange ribs formed at each outer end of the sealing body main part. Since the small sealing rings of the O-ring type swell less than the previously known larger sealing bodies, the linear stepper motor must travel fewer steps at the stop to ensure tightness. The sealing rings are shaped such that a closed cavity is formed at the back of the sealing rings between the rear sealing surface of the sealing rings and the one or two central ribs and the sealing body surface. This closed cavity allows the sealing ring to make better contact with the sealing surfaces of the sealing body main part and the central rib. This allows leakage to be largely excluded along the rear sealing paths between the sealing body main part and the rear sealing surface (i.e. the rear surface) of the sealing rings. Instead of a single wider central rib to space the seals from each other and fix them on the sealing body main part, two central ribs can be disposed and formed on the sealing body main part. The width of the central rib or the distance of the two central ribs to each other is determined by the internal dimensions of the valve seats to be sealed, i.e. from the distance of the respective sealing surfaces of the valve body.

It is a considerable advantage if a sealing system for switchable water valves with two formed central ribs spaced from each other has a central recess between the two central ribs. This reduces both material usage and the mass to be moved by the linear stepper motor. In addition, this has advantages with regard to the dimensional stability of the sealing body main part if, for instance, it is to be manufactured as an injection-moulded component.

In particular, in the novel sealing system for switchable water valves, the sealing body main part with the central ribs, if designed as a single piece, is formed as a single injection moulded plastic part manufactured in a single operation.

It is a further advantage if two or more cavities are formed inside the sealing body main part of the sealing system. This reduces the mass of the sealing body main part to be moved as well as allows the different wall thicknesses including the related dimensional stability of the sealing body main part to be set more precisely.

However, it is also possible for special embodiments of the sealing system for switchable water valves, to design the sealing body main part with one central rib or with two central ribs in multiple pieces. This can offer, e.g., constructive or manufacturing advantages.

It is also an advantage if on the sealing system for switchable water valves the sealing rings of the O-ring type are inserted and press-fitted in the sealing body main part under a defined pretension. This can be achieved in a simple manner by the inner diameter of the sealing rings being somewhat smaller than the outer diameter of the sealing body main part in the area of the valve seat. Furthermore, both ends of the sealing body main part can have circumferential flange ribs to secure the sealing rings against displacement on the surface of the sealing body main part when the sealing body is moved linearly.

Preferably, for reasons of mounting and, as the case may be, repair, the sealing system for switchable water valves is designed such that the sealing body main part is coupled with the valve actuating rod at a coupling point. This coupling point is configured as a solid-body joint or a ball-and-socket joint.

### BRIEF DESCRIPTION OF THE DRAWINGS

A preferred embodiment of the invention will now be described, by way of example only, with reference to figures of the accompanying drawings. In the figures, identical structures, elements or parts that appear in more than one figure are generally labeled with a same reference numeral in all the figures in which they appear. Dimensions of components and features shown in the figures are generally chosen for convenience and clarity of presentation and are not necessarily shown to scale.
Fig 1: shows a sectional view through a complete sealing body with an insert-moulded valve actuating rod and a top view of the sealing body side,
Fig 2: shows a sectional view of a switchable complete three-way valve with a built-in sealing system,
Fig 3: shows a detail view of the complete sealing body with simple contours of the sealing areas of the valve body and of the front sealing surface of a sealing ring.

### DETAILED DESCRIPTION OF THE PREFERRED EMBODIMENTS

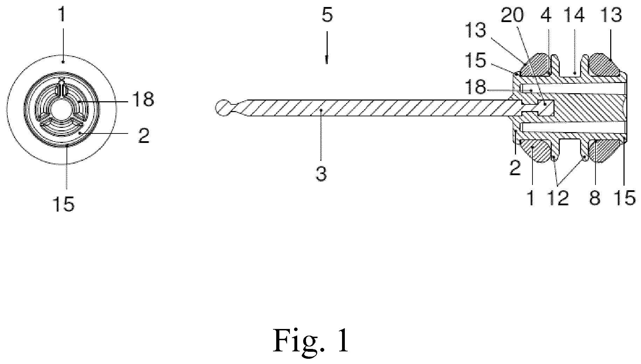

**Fig. 1** shows a sectional view of a complete sealing body 5 with a valve actuating rod 3 coupled to it. It also shows a top view of the sealing body side of the sealing body 5. The complete sealing body 5 consists of a sealing body main part 2 with two press-fitted sealing rings 1 and the coupled valve actuating rod 3. Here, the sealing body main part 2 is configured as a one-piece injection-moulded part and, during injection moulding, the valve actuating rod 3 is directly overmoulded at the same time and thus firmly coupled to the sealing body main part 2 in the same operation. The coupling point 9 of the valve actuating rod 3 with the linear stepper motor 7 is configured as a ball-and-socket joint in this embodiment. The sealing body main part 2 can also be coupled with the valve actuating rod 3 by a detachable connection at the coupling point 20, e.g. by means of a ball-and-socket joint. In this embodiment, three cavities 18 are distributed radially symmetrically in the sealing body main part 2. This reduces the mass of the sealing body main part to be moved as well as allows the wall thicknesses including the related dimensional stability of the sealing body main part 2 to be set more precisely. In the center of the sealing body main part 2, two disc-shaped central ribs 12 are disposed spaced from each other. A special recess 14 is formed between the central ribs 12. This reduces the mass to be moved which the coupled linear stepper motor 7 must move at each travel operation, which has a positive effect on its service life. The sealing body main part 2 has two specially shaped sealing rings 1 of the O-ring type press-fitted to it under pretension from the outside and spaced a defined distance from each other by the two central ribs 12. These two sealing rings 1 are fixed in their positions by two circumferential flange ribs 15 formed at each outer end of the sealing body main part 2 and secured against slipping on the surface of the sealing body main part 2. Since the small sealing rings 1 of the O-ring type also swell less than previously known larger sealing bodies, the linear stepper motor 7 must travel fewer steps at the stop to ensure tightness. The drive consists of a linear stepper motor 7 and a spindle-nut system (not drawn), which is designed to be self-locking so that the required contact pressure of the sealing rings 1 to the sealing areas 10 of the valve body 17 at rest is ensured. The two sealing rings 1 are shaped such that a closed cavity 4 is formed at the back of each of the sealing rings 1 between the rear sealing surface 8 of the sealing rings 1 and the two central ribs 12 and the surfaces of the sealing body main part 2. This closed cavity 4 allows the sealing ring 1 to make better contact with the sealing surfaces of the sealing body main part 2. This allows leakage to be largely excluded along the rear sealing paths between the sealing body main part 2 with the central rib 12 and the rear sealing surface 8 of the sealing rings 1. The width of the central rib 12 or the distance of the two central ribs 12 to each other is determined by the internal dimensions of the valve seats to be sealed and by the contact pressure applied by the linear stepper motor 7 to press the sealing rings 1 against the sealing areas 10 of the valve body 17 in the closed position, i.e. by the distance of the respective sealing areas 10 of the valve body 17. Although the pretension of the sealing rings 1 slackens over time, in particular when used in hot water circuits, tightness in this water valve design can be ensured over a very long period of time, e.g. by self-locking. Moreover, in case of wear, it is possible to regenerate the three-way valve quickly after it has been demounted, by replacing the sealing body 5 very fast with just a few manipulations in order to re-establish the required tightness of the water valve.

The advantage of the sealing system according to the invention for switchable water valves for use in heating appliances and water heaters is that it is constructively very simple and consists of very few components. This allows its fast and automated manufacture. Moreover, it has such a sealing effect that in this type of water valves, to which pressures up to 4 bar and more are applied, no leakage occurs in both valve positions over a long period of time when it is used in a three-way water valve 11. Moreover, due to the constructive design as compared with previous comparable three-way water valves, the flow resistance is reduced further. The travel path of the valve actuating rod 3 with the two sealing rings 1 can also be shortened since the axial swelling of the sealing rings 1 could also be shortened. Moreover, material usage as compared with other sealing bodies is reduced so that the economy of the three-way valve 11 improves. With the sealing system according to the invention, it is also possible to operate with the same or higher contact pressures of the sealing body 5 against the sealing surfaces 10 of the valve body 17. Moreover, different sealing surface geometries inside the valve body can be realized in a simple manner depending on the special application case. The sealing system for switchable water valves is configured as a three-way water valve 11 with a linear stepper motor 7 drive. This linear stepper motor 7 is disposed outside at a cartridge 6, which is inserted into the valve body 17 and seal-connected to it. The linear displacement of the complete sealing body 5 is effected by a valve actuating rod 3, which is guided through the cartridge 6. The sealing body 5 is disposed directly on the valve actuating rod 3 and joined to it. Generally, it is overmoulded directly on the valve actuating rod 3. However, it can also be shrink-fitted as a separate component, e.g. on the valve actuating rod 3, or be disposed in any other way, such as connected in a mechanically displaceable manner. The sealing body 5 on the valve actuating rod 3 consists of a sealing body main part 2 on which one or two disc-shaped central ribs 12 are disposed. The sealing body main part 2 has two press-fitted specially shaped sealing rings 1 of the O-ring type spaced a defined distance from each other by the one or two central ribs 12. These two sealing rings 1 are fixed in their positions by two circumferential flange ribs 15 formed at each outer end of the sealing body main part 2. Since the small sealing rings 1 of the O-ring type swell less than the previously known larger sealing bodies, the linear stepper motor 7 must travel fewer steps at the stop to ensure tightness. The sealing rings 1 are shaped such that a closed cavity 4 is formed at the back of the sealing rings 1 between the rear sealing surface 8 of the sealing rings 1 and the one or two central ribs 12 and the sealing body surface. This closed cavity 4 allows the sealing ring 1 to make better contact with the sealing surfaces of the sealing body main part 2 and the central rib 12. This allows leakage to be largely excluded along the rear sealing paths between the sealing body main part 2 and the rear sealing surface 8 (i.e. the rear surface) of the sealing rings 1. Instead of a single wider central rib 12 to space the seals from each other and fix them on the sealing body main part 2, two central ribs 12 can be disposed and formed on the sealing body main part 2. The width of the central rib 12 or the distance of the two central ribs 12 to each other is determined by the internal dimensions of the valve seats to be sealed, i.e. from the distance of the respective sealing surfaces 10 of the valve body 17.

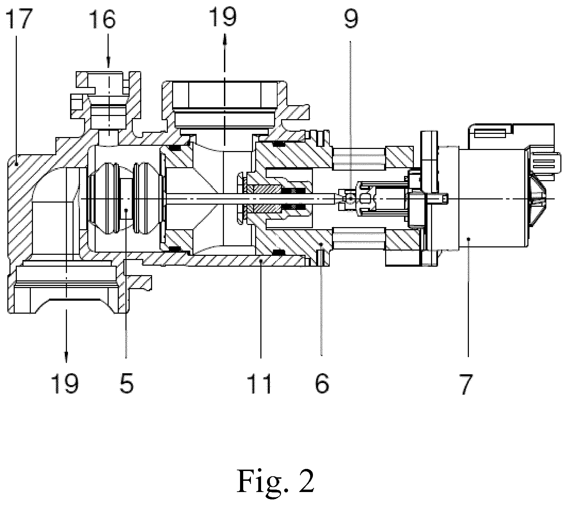

**Fig. 2** shows a sectional view of a switchable complete three-way water valve 11 with the built-in sealing system 5 according to the invention. The valve body 17, inside which the sealing body 5 is built in, has a cartridge 6 mounted as an axial insert. In an axially contiguous manner, the linear stepper motor 7 is slipped on as an electromechanical drive and suitably fasted to the cartridge 6. This motor accordingly moves the valve actuating rod 3 through the coupling point 9 (here also implemented as a ball-and-socket joint) so that the rod together with the overmoulded sealing body main part 2 joined to it can be linearly adjusted. The valve actuating rod 3 is guided sealingly inside the cartridge 6. This sealing body 5 is axially movable in the valve space of the valve body 17 and, when moved into the stop, generally seals against the left or the right valve seat of the valve body 17. Due its only single-sided support, or if movably coupled with the valve actuating rod 2 in a special embodiment, it is capable to act against the sealing areas 10 of the valve body 17 in a slightly off-centred manner. This makes it seal reliably even if there is exceptionally any contamination between the sealing area 10 and the front sealing surface 13. If the sealing area 10 is very angular (only a small or no surface) or has just a very small radius, this reduces the possibility of contamination being found in the sealing area and leading to leakages.

In a central position, the water of the water valve can flow freely from the inlet 16 into both outlets 19. By means of the valve position of the whole sealing body 5, which can be freely controlled by the linear stepper motor 7, the outflow quantity can be precisely regulated for an outlet 19. In its end positions, the sealing body 5 seals the one or the other outlet 19, depending on which of the water circuits must be closed at the time.

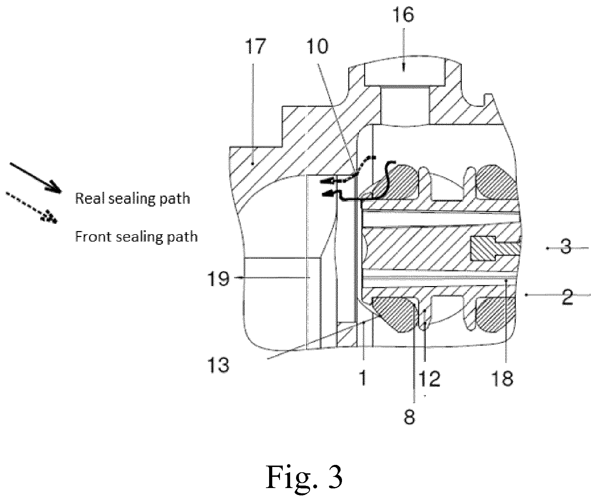

**Fig. 3** shows a detail view of the complete sealing body 5 in a stop position, i.e. in a sealing position including the potential leakage paths relating to the left sealing ring 1. The sealing body 5 has been moved against the sealing area 10 of the valve body 17 by means of the linear stepper motor 7 via the valve actuating rod 3 and arrested by self-locking. The sealing body 5 with the two central ribs 12 has a special recess 14 centrally on its outside and three cavities 18 are formed inside the sealing body. The front sealing surface 13 of the sealing ring 1 is of a slightly convex shape. The contour of the ring, viewed in cross section, is a slanted, slightly convex conical area. It is deformed by the contact pressure such that no leakage can form along the front sealing path (dashed course line). At the same time, the rear sealing surface 8 of the sealing ring 1 is pressed against the angular surface of the sealing body main part 2. The closed cavity 4 allows the rear sealing surface 8, a radially shaped surface contour when viewed in cross-section, to deform very well and to make contact in an optimally sealing manner. This closes the rear sealing path (thick line) and reliably prevents rear leakage over a very long period of time. The advantage of this embodiment is that this water valve consists of few components and has a long service life. Furthermore, any contamination or deposits have hardly any influence on the leakage of the three-way water valve 11 according to the invention.

It is a considerable advantage if a sealing system for switchable water valves with two formed central ribs 12 spaced from each other has a central recess 14 between the two central ribs 12. This reduces both material usage and the mass to be moved by the linear stepper motor 7. In addition, this has advantages with regard to the dimensional stability of the sealing body main part 2 if, for instance, it is to be manufactured as an injection-moulded component.

In particular, in the novel sealing system for switchable water valves, the sealing body main part 2 with the central ribs 12, if designed as a single piece, is formed as a single injection moulded plastic part manufactured in a single operation.

It is a further advantage if two or more cavities 18 are formed inside the sealing body main part 2 of the sealing system. This reduces the mass of the sealing body main part to be moved as well as allows the different wall thicknesses including the related dimensional stability of the sealing body main part to be set more precisely.

However, it is also possible for special embodiments of the sealing system for switchable water valves, to design the sealing body main part 2 with one central rib or with two central ribs 12 in multiple pieces. This can offer, e.g., constructive or manufacturing advantages.

It is also an advantage if on the sealing system for switchable water valves the sealing rings 1 of the O-ring type are inserted and press-fitted in the sealing body main part 2 under a defined pretension. This can be achieved in a simple manner by the inner diameter of the sealing rings 1 being somewhat smaller than the outer diameter of the sealing body main part 2 in the area of the valve seat. Furthermore, both ends of the sealing body main part 2 can have circumferential flange ribs 15 to secure the sealing rings against displacement on the surface of the sealing body main part 2 when the sealing body is moved linearly.

Preferably, for reasons of mounting and, as the case may be, repair, the sealing system for switchable water valves is designed such that the sealing body main part 2 is coupled with the valve actuating rod 3 at a coupling point 9. This coupling point 9 is configured as a solid-body joint or a ball-and-socket joint.

It is also possible to have contours of the sealing rings 1 of the O-ring type that are configured and shaped to match the contours of the sealing areas 10 of the valve body 17 of the three-way valve 11. As needed, these sealing areas can be configured, e.g., angular, with a smaller or larger radius, planar or planar with serrations. Accordingly, the contours of the sealing rings 1 are adapted to them on their front sealing surface 13.

Moreover, the two sealing areas 10 of the valve body 17 or also their contours can be configured differently in the sealing system of the three-way valve (11).

The technical solution described above is primarily usable in a novel economical sealing system for switchable water valves for use in heating appliances and water heaters, specifically for three-way water valves.

In the description and claims of the present application, each of the verbs "comprise", "include", "contain" and "have", and variations thereof, are used in an inclusive sense, to specify the presence of the stated item or feature but do not preclude the presence of additional items or features.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

The embodiments described above are provided by way of example only, and various other modifications will be apparent to persons skilled in the field without departing from the scope of the invention as defined by the appended claims.

## Claims

1. Sealing system for switchable water valves designed as a three-way water valve (11) comprising a drive by means of a linear stepper motor (7) disposed at a cartridge (6) and adjustment by means of a valve actuating rod (3) and a valve body (17), the sealing system comprising a sealing body (5) configured to be disposed in the valve body (17), the sealing body (5) comprising a sealing body main part (2) with one or two central ribs (12), the sealing body main part (2) being is disposed on the valve actuating rod (3), and the sealing body (5) including two sealing rings (1) of the O-ring type being spaced a defined distance from each other, and are press-fitted on the sealing body main part (2), **characterized by** each of the sealing rings (1) having a cross-sectional shape of a slanted slightly convex conical area defined by a larger end, a smaller end and two sides, each of the two sides being connected to the larger end and the smaller end, the larger end being connected to the two sides and defining a rear sealing surface (8) of each of the sealing rings (1), the rear sealing surface (8) having a radially-shaped surface contour, one of the two sides being in contact with the sealing body main part (2) and the other one of the two sides defining a front sealing surface (13) being of slightly convex conical shape, and each of the rear sealing surfaces (8) being in contact with a respective side of the one central rib (12) or with a respective side of the central rib (12) facing away from the other central rib (12), so that a cavity (4) is formed at the back of each of the sealing rings (1) between the rear sealing surface (8) of the sealing rings (1) and the central rib(s) (12) and the sealing body main part.

2. Sealing system for switchable water valves according to claim 1, **characterized in that** in the case of two central ribs (12), a central recess (14) is formed between the two central ribs (12).

3. Sealing system for switchable water valves according to one of claims 1 to 2, **characterized in that** the sealing body main part (2) with the central ribs (12) is formed as a one-piece injection moulded plastic part.

4. Sealing system for switchable water valves according to claim 3, **characterized in that** the sealing body main part (2) is directly overmoulded onto the valve actuating rod (3).

5. Sealing system for switchable water valves according to one of claims 1 to 4 **characterized in that** two or more cavities (18) are formed inside the sealing body main part (2).

6. Sealing system for switchable water valves according to one of claims 1 or 2, **characterized in that** the sealing body main part (2) with the central ribs (12) is formed in multiple parts.

7. Sealing system for switchable water valves according to one of claims 1 to 4, **characterized in that** the sealing rings (1) of the O-ring type are inserted in the sealing body main part (2) under a defined pretension by the inner diameter of the sealing rings (1) being somewhat smaller than the outer diameter of the sealing body main part (2) in the area of the valve seat and circumferential flange ribs (15) being formed at the outer ends to secure them.

8. Sealing system for switchable water valves according to one of claims 1 to 7, **characterized in that** the sealing body main part (2) is coupled with the valve actuating rod (3) at a coupling point (9), which is designed as a solid-body joint or a ball-and-socket joint.

## Patentansprüche

1. Dichtungssystem für schaltbare Wasserventile, die als ein Dreiwegewasserventil (11) konstruiert sind, umfassend einen Antrieb mittels eines linearen Schrittmotors (7), der an einer Kassette (6) angeordnet ist, und eine Justierung mittels einer Ventilbestätigungsstange (3) und eines Ventilkörpers (17), wobei das Dichtungssystem einen Dichtungskörper (5) umfasst, der dazu konfiguriert ist, in dem Ventilkörper (17) angeordnet zu werden, wobei der Dichtungskörper (5) einen Dichtungskörperhauptteil (2) mit einer oder zwei zentralen Rippen (12) umfasst, wobei der Dichtungskörperhauptteil (2) auf der Ventilbetätigungsstange (3) angeordnet ist und der Dichtungskörper (5) zwei Dichtungsringe (1) vom O-Ring-Typ einschließt, die in einem definierten Abstand voneinander beabstandet sind und auf den Dichtungskörperhauptteil (2) eingepresst sind, **dadurch gekennzeichnet, dass** jeder der Dichtungsringe (1) eine Querschnittsform einer geneigten, leicht konvexen konischen Fläche aufweist, die durch ein größeres Ende, ein kleineres Ende und zwei Seiten definiert ist, wobei jede der zwei Seiten mit dem größeren Ende und dem kleineren Ende verbunden ist, wobei das größere Ende mit den zwei Seiten verbunden ist und eine hintere Dichtungsoberfläche (8) jedes der Dichtungsringe (1) definiert, wobei die hintere Dichtungsoberfläche (8) eine radial geformte Oberflächenkontur aufweist, wobei eine von den zweiten Seiten in Kontakt mit dem Dichtungskörperhauptteil (2) ist und die andere der zwei Seiten eine vordere Dichtungsoberfläche (13) definiert, die eine leicht konvexe konische Form aufweist, und jede der hinteren Dichtungsoberflächen (8) in Kontakt mit einer jeweiligen Seite der einen zentralen Rippe (12) oder mit einer jeweiligen Seite der zentralen Rippe (12) ist, die von der anderen zentralen Rippe (12) weg weist, so dass ein Hohlraum (4) an der Rückseite jedes der Dichtungsringe (1) zwischen der hinteren Dichtungsoberfläche (8) der Dichtungsringe (1) und der bzw. den zentralen Rippen (12) und dem Dichtungskörperhauptteil gebildet wird.

2. Dichtungssystem für schaltbare Wasserventile nach Anspruch 1, **dadurch gekennzeichnet, dass** in dem Fall von zwei zentralen Rippen (12) eine zentrale Aussparung (14) zwischen den zwei zentralen Rippen (12) gebildet wird.

3. Dichtungssystem für schaltbare Wasserventile nach einem der Ansprüche 1 bis 2, **dadurch gekennzeichnet, dass** der Dichtungskörperhauptteil (2) mit den zentralen Rippen (12) als ein einteiliges Kunststoffspritzgussteil gebildet wird.

4. Dichtungssystem für schaltbare Wasserventile nach Anspruch 3, **dadurch gekennzeichnet, dass** der Dichtungskörperhauptteil (2) direkt auf die Ventilbetätigungsstange (3) umspritzt wird.

5. Dichtungssystem für schaltbare Wasserventile nach einem der Ansprüche 1 bis 4, **dadurch gekennzeichnet, dass** zwei oder mehr Hohlräume (18) im Inneren des Dichtungskörperhauptteils (2) gebildet werden.

6. Dichtungssystem für schaltbare Wasserventile nach einem der Ansprüche 1 oder 2, **dadurch gekennzeichnet, dass** der Dichtungskörperhauptteil (2) mit den zentralen Rippen (12) in mehreren Teilen gebildet wird.

7. Dichtungssystem für schaltbare Wasserventile nach einem der Ansprüche 1 bis 4, **dadurch gekennzeichnet, dass** die Dichtungsringe (1) vom O-Ring-Typ in den Dichtungskörperhauptteil (2) unter einer definierten Vorspannung eingesetzt werden, indem der Innendurchmesser der Dichtungsringe (1) etwas kleiner als der Außendurchmesser des Dichtungskörperhauptteils (2) in dem Bereich des Ventilsitzes ist und Umfangsflanschrippen (15) an den Außenenden gebildet sind, um sie zu sichern.

8. Dichtungssystem für schaltbare Wasserventile nach einem der Ansprüche 1 bis 7, **dadurch gekennzeichnet, dass** der Dichtungskörperhauptteil (2) mit der Ventilbestätigungsstange (3) an einem Kopplungspunkt (9) gekoppelt ist, der als ein Vollkörpergelenk oder ein Kugelgelenk konstruiert ist.

## Revendications

1. Un système d'étanchéité pour vannes d'eau commutables, conçu comme une vanne d'eau à trois voies (11), comprenant un entraînement par moteur pas à pas linéaire (7) disposé sur une cartouche (6) et un réglage par une tige d'actionnement (3) et un corps de vanne (17), le système d'étanchéité comprenant un corps d'étanchéité (5) conçu pour être disposé dans le corps de vanne (17), le corps d'étanchéité (5) comprenant une partie principale (2) avec une ou deux nervures centrales (12), la partie principale du corps d'étanchéité (2) est disposée sur la tige d'actionnement de la vanne (3), et le corps d'étanchéité (5) comprenant deux bagues d'étanchéité (1) de type joint torique espacées d'une distance définie l'une de l'autre et sont assemblées par emmanchement sur la partie principale du corps d'étanchéité (2), la présente invention est **caractérisée en ce que** chacune des bagues d'étanchéité (1) présente une section transversale en forme de cône légèrement convexe incliné, définie par une extrémité large, une extrémité plus petite et deux côtés, chacun des côtés étant relié à l'extrémité large et à l'extrémité plus petite, l'extrémité large étant reliée aux deux côtés et définissant une surface d'étanchéité arrière (8) de chacune des bagues d'étanchéité (1), la surface d'étanchéité arrière (8) présente un contour de surface de forme radiale, l'un des deux côtés étant en contact avec la partie principale du corps d'étanchéité (2) et l'autre des deux côtés définissant une surface d'étanchéité avant (13) de forme conique légèrement convexe, et chacune des surfaces d'étanchéité arrière (8) étant en contact avec un côté respectif d'une nervure centrale (12) ou avec un côté respectif de la nervure centrale (12) opposée à l'autre nervure centrale (12), de sorte qu'une cavité (4) est formée à l'arrière de chacune des bagues d'étanchéité (1) entre la surface d'étanchéité arrière (8) des bagues d'étanchéité (1) et la ou les nervures centrales (12) et la partie principale du corps d'étanchéité.

2. Le système d'étanchéité pour vannes d'eau commutables selon la revendication 1, **caractérisé en ce que** dans le cas de deux nervures centrales (12), un évidemment central (14) est formé entre les deux nervures centrales (12).

3. Le système d'étanchéité pour vannes d'eau commutables selon l'une des revendications 1 à 2, **caractérisé en ce que** la partie principale du corps d'étanchéité (2) avec les nervures centrales (12) est constituée d'une seule pièce en plastique moulé par injection.

4. Le système d'étanchéité pour vannes d'eau commutables selon la revendication 3, **caractérisé en ce que** la partie principale du corps d'étanchéité (2) est directement surmoulée sur la tige d'actionnement de la vanne (3).

5. Le système d'étanchéité pour vannes d'eau commutables selon l'une des revendications 1 à 4, **caractérisé en ce que** deux ou plusieurs cavités (18) sont formées à l'intérieur de la partie principale du corps d'étanchéité (2).

6. Le système d'étanchéité pour vannes d'eau commutables selon l'une des revendications 1 ou 2, **caractérisé en ce que** la partie principale du corps d'étanchéité (2) avec les nervures centrales (12) est constituée de plusieurs parties.

7. Le système d'étanchéité pour vannes d'eau commutables selon l'une des revendications 1 à 4, **caractérisé en ce que** les bagues d'étanchéité (1) du type à joint torique sont insérées dans la partie principale du corps d'étanchéité (2) sous une précontrainte définie, par le diamètre intérieur des bagues d'étanchéité (l) étant légèrement inférieur au diamètre extérieur de la partie principale du corps d'étanchéité (2) dans la zone du siège de vanne et des nervures de bride circonférentielles (15) étant formées aux extrémités extérieures pour leur fixation.

8. Le système d'étanchéité pour vannes d'eau commutables selon l'une des revendications 1 à 7, **caractérisé en ce que** la partie principale du corps d'étanchéité (2) est accouplée à la tige d'actionnement de la vanne (3) au niveau d'un point d'accouplement (9) qui est conçu comme une articulation à corps plein ou une articulation à rotule.
